# EUROPEAN PATENT SPECIFICATION

(11) **EP 2 758 258 B1**
(45) Date of publication and mention of the grant of the patent: **15.06.2016**
(21) Application number: 12767189.9
(22) Date of filing: 21.09.2012
(51) Int. Cl.: B60D 1/24, B62D 11/04, B62D 13/00, B62D 59/04

(54) **TOWED VEHICLE ARRANGEMENT RESPONSIVE TO LATERAL HITCH LOADING**
AUF SEITLICHE ANHÄNGERKUPPLUNGSBELASTUNG REAGIERENDE GEZOGENE FAHRZEUGANORDNUNG
AGENCEMENT DE VÉHICULES TRACTÉ ET TRACTEUR SENSIBLE À LA CHARGE LATÉRALE SUR L'ATTELAGE

(30) Priority: 23.09.2011 US 201113241898
(43) Date of publication of application: 30.07.2014
(73) Proprietor: Deere & Company, Moline, IL 61265 (US)
(72) Inventor: SHEIDLER, Alan D., Moline , IL 61265 (US); ANDERSON, Noel, W., Fargo, ND 58102 (US)
(74) Representative: Dehnhardt, Florian Christopher
(86) International application number: PCT/US2012/056521
(87) International publication number: WO 2013/043996

(56) References cited:
- GB-A- 2 466 086
- US-A- 4 771 838
- US-A1- 2001 003 393
- US-A1- 2007 193 795

## Description

The present invention relates to a vehicle arrangement which comprises a tow vehicle and a towed vehicle. Furthermore, the invention relates to a method of towing a towed vehicle using a tow vehicle.

When using agricultural equipment, it is common to pull a towed vehicle behind a tow vehicle. For example, during a harvesting operation using a combine, it is common to pull a grain cart or gravity box behind a tractor. When the grain bin in the combine is full, the grain cart or gravity box is pulled alongside of the combine, the unloading auger is swung to the side of the combine, and the grain is offloaded into the grain cart or gravity box. The full grain cart or gravity box may then be transported to a dryer location, such as an on-farm batch or bin dryer, or a local elevator.

An example disclosing the preamble of claim 1 is shown in GB 2466086 A1.

As another example, it is also common to pull a fertilizer spreader behind a tractor for application of corn, fertilizer, lime, etc. to an agricultural field.

When pulling a towed vehicle such as a grain cart, gravity box, fertilizer spreader or the like behind a tractor, the weight of the towed vehicle when full with product can be substantial. For this reason, it is common to use a relatively large tractor to pull such a towed vehicle. The weight effects of a towed vehicle on a tow vehicle are further compounded when a number of towed vehicles are connected together in a train arrangement, such as a number of loaded gravity boxes which are trained together and pulled to a dryer location using a single tractor.

What is needed in the art is a way of towing a heavy towed vehicle or train arrangement of towed vehicles, without adversely affecting the operation of the tow vehicle.

This and other objects are achieved by the present invention as disclosed in claim 1.

The invention in another form is directed to a method of towing a towed vehicle using a tow vehicle as disclosed in claim 10.

For a complete understanding of the objects, techniques, and structure of the invention reference should be made to the following detailed description and accompanying drawings, wherein similar components are designated by identical reference numerals:
- Fig. 1: is a perspective view of an embodiment of a vehicle arrangement of the present invention comprising a tow vehicle and a towed vehicle in the form of a fertilizer spreader,
- Fig. 2: is a schematic view of the fertilizer spreader shown in Fig. 1,
- Fig. 3: is a schematic top view of a towed vehicle when encountering an obstruction, showing reactionary forces,
- Fig. 4: is a schematic top view of a towed vehicle when encountering an obstruction, showing reactionary forces with motors on corresponding wheels actuated,
- Fig. 5: is a schematic top view of a towed vehicle when turning, showing reactionary forces with motors on corresponding wheels actuated, and
- Fig. 6: is a flowchart illustrating an embodiment of a method of the present invention for towing a towed vehicle.

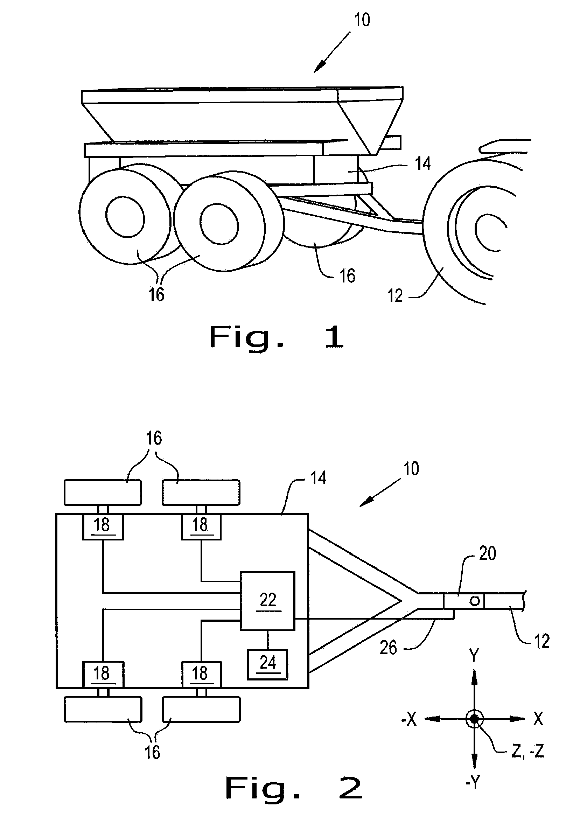

Referring now to the drawings, and more particularly to Fig. 1, there is shown an embodiment of a vehicle arrangement of the present invention including a towed vehicle 10 which is towed by a tow vehicle 12. The towed vehicle 10 is shown in the form of a fertilizer spreader in the illustrated embodiment, but could be any type of other towed vehicle. For example, the towed vehicle 10 could also be in the form of a grain cart, a gravity box or the like.

Towed vehicle 10 (Figs. 1 and 2) generally includes a frame 14, at least two wheels 16 carried by the frame 14, at least two motors 18, a load sensing hitch 20, and an electrical processing circuit 22. In the illustrated embodiment, the towed vehicle 10 includes four wheels 16, but may include a different number of wheels, depending on the application.

Towed vehicle 10 is shown as including four motors 18 which are respectively coupled with a corresponding wheel 16. However, the towed vehicle 10 need not necessarily include a motor 18 associated with each corresponding wheel 16. For example, the towed vehicle 10 could be provided with a pair of motors 18 with a single motor on each side. The motors 18 are assumed to be electric motors in the illustrated embodiment, but could be differently configured depending on the application, such as hydraulic motors.

When configured as electric motors, it is desirable to provide the towed vehicle 10 with an onboard source of electrical power, such as a single battery 24 or a bank of batteries. The electrical power could also be obtained from an onboard internal combustion engine (i.e., an alternator/generator output of such an engine). Alternatively, it is also possible to obtain electrical power from a similar electrical source onboard the tow vehicle 12.

Load sensing hitch 20 senses by means of a dedicated load sensor a load along an axis which is generally perpendicular to a longitudinal or travel direction of the towed vehicle 10 and/or the tow vehicle 12. The load sensing hitch 20 or the dedicated load sensor may also be configured to sense loads along three separate axes defining a three-dimensional coordinate system, but for purposes of this invention, it is the lateral direction that is important. In the illustrated example, the load sensor in the load sensing hitch 20 may be provided with load cells to sense loads along the plus or minus X, Y and/or Z directions (the Z direction extending perpendicular to the drawing plane of Fig. 2). A load sensed in the transverse or lateral (Y) direction may be used, e.g., to sense a turning maneuver or wheel dropping into a hole, and in turn to apply an acceleration or braking torque to at least one of the wheels 16 to achieve a torque vectoring of the towed vehicle 10.

The specific configuration of the load sensing hitch 20 may vary, depending on the application. For example, the load sensor of the load sensing hitch 20 may include one or more load cells for detecting or sensing lateral load. Moreover, the load sensing hitch 20 is shown as being coupled with and carried by a portion of the tongue or hitch of the towed vehicle 10, but could also be carried by the hitch extending rearward from the tow vehicle 12, or even potentially partially carried by each of the towed vehicle 10 and the tow vehicle 12. Other configurations are also possible.

Electrical processing circuit 22 receives an output signal from the load sensing hitch 20 (i.e., the load sensor) and actuates one or more of the motors 18, dependent upon the output signal. The electrical processing circuit 22 is shown as being connected with the load sensing hitch 20 via a single line 26, but could be coupled in a different manner such as a data bus, wireless connection, etc.

More specifically, the electrical processing circuit 22 compares a value of said lateral load based on the output signal of the load sensing hitch 20 with an acceptable load range. If the value of the lateral load falls within this acceptable load range, then none of the motors 18 is actuated. On the other hand, if the value of the lateral load falls outside of this acceptable load range, then one or more of the motors 18 are actuated to apply a desired thrust or braking action to the corresponding wheel 16. In this manner, the towed vehicle 10 is independently accelerated or decelerated apart from any pulling force applied by the tow vehicle 12. The electrical processing circuit 22 actuates one or more of the motors 18 such that an amount of thrust or braking that is applied to a corresponding wheel 16 is proportional to a magnitude of the lateral load.

It is also possible to limit the torque which is applied to a motor 18 such that damage does not occur to the frame 14, drive train, etc. of the towed vehicle 10. For example, the electrical processing circuit 22 may be configured to apply a command signal effecting a maximum output torque to a given motor 18 and wheel 16 which is less than a maximum threshold value.

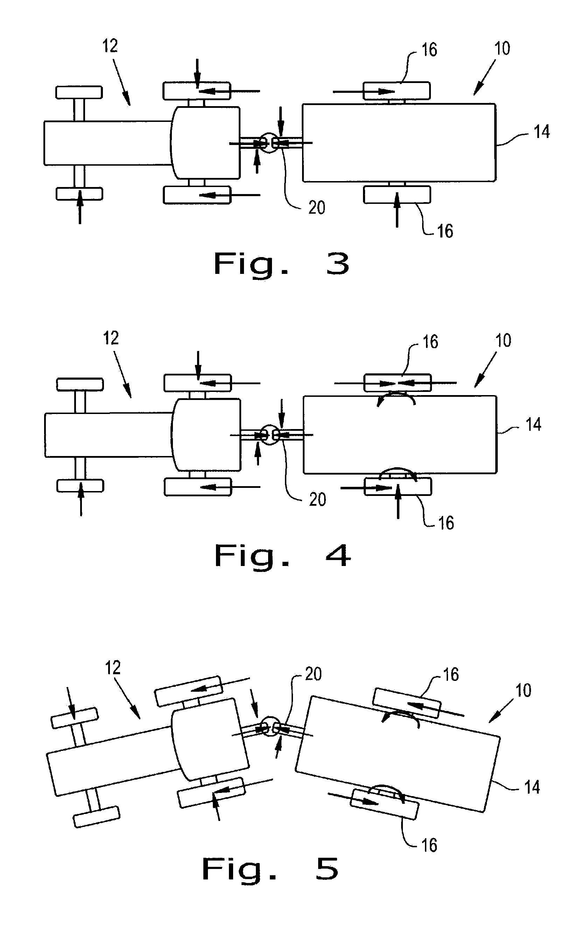

Referring now to Fig. 3 in combination with Fig. 2, there is shown a top schematic view of a hypothetical occurrence in which a wheel 16 of a towed vehicle 10 in the form of an implement falls into a hole in an agricultural field. More specifically, as the tow vehicle 12 in the form of a tractor is moving forward, the right hand wheel 16 of the implement 10 encounters an obstruction in the form of a hole in the agricultural field. The obstruction resists forward motion of the implement 10, which causes the implement 10 to decelerate but due to the uneven loading on the right hand side of the implement 10, a moment is also created. Due to the deceleration of the implement 10, there is an instantaneous increase in the hitch load along the direction of travel. The tractor 12 sees a reaction force from the implement 10 directly opposite the direction of travel. The induced moment in the implement 10 from the obstruction creates a force vector to the left on the implement side of the hitch. The tractor side of the hitch reacts the implement side force but this reaction force is to the right. The tractor drive tires also react the force from the hitch, but this time the force is to left. The front tractor tires also must react to the hitch load as shown. The reaction forces generated by the resistance force of the obstruction cause an increase in the draft load and lateral load in the hitch. If the lateral load is sufficiently large, the rear of the tractor 12 can inadvertently slide to the left. The driver may have to steer the tractor 12 to compensate for these effects.

Referring now to Fig. 4 in combination with Fig. 2, there is shown a top schematic view of a hypothetical occurrence similar to Fig. 3, but in this instance the motors 18 in the implement 10 are actuated to counteract the obstruction. More specifically, as tractor 12 is moving forward, the right hand wheel of the implement 10 encounters an obstruction in the form of a hole in the agricultural field. The obstruction resists forward motion of the implement 10. This causes the implement 10 to decelerate but due to the uneven loading on the right hand side of the implement 10, a moment is also created. Due to the deceleration of the implement 10, there is an instantaneous increase in hitch load along the direction of travel. There is an increase in the load on the load sensing hitch 20 along the direction of travel and to the side as in Fig. 3, and the load sensor in the load sensing hitch 20 detects these perpendicular forces. The electrical processing circuit 22 receives the sensed change in lateral load and draft load, and computes the magnitude of the resistance force vector from the obstruction. The electrical processing circuit 22 commands the motors 18 in the implement 10 to respond to reduce or eliminate the resistance force vector. The right hand motor provides positive driving torque and the left hand motor provides braking torque, if needed. In this way, the trailer moment due to the obstruction is negated. The tractor 12 can more easily maintain a straight trajectory requiring minimal or no steering corrections. Since energy can be transferred electrically from the left hand motor working as a generator to the right hand motor working as a motor, much of the trailer moment can be negated without addition of energy to the system. If a storage battery is added, both motors 18 can work as motors to reduce the draft load to the tractor 12 to negotiate severe obstructions.

Referring now to Fig. 5 in combination with Fig. 2, there is shown a top schematic view of a hypothetical occurrence in which the tractor 12 turns and the implement 10 uses the motors 18 to counteract moments. More specifically, as the tractor 12 is moving forward, the tractor 12 turns to the left. Depending on the speed and direction, a moment is generated in the implement 10. The motor 18 at each wheel 16 responds to counteract the induced moment. The load sensing hitch 20 is equipped with an angle sensor to determine the hitch angle or relative angular orientation between tractor 12 and implement 10 while steering, wherein the angle sensor provides an output signal to the electrical processing circuit 22 representing the hitch angle or relative angular orientation. If the draft load and lateral load of the hitch do not correspond to the insofar expected steering maneuver, the electrical processing circuit 22 commands the motors 18 at each wheel 16 to provide drive torque or braking torque to reduce the lateral load in the hitch. The tractor 12 is able to complete the steering maneuver more accurately, without the tractor 12 sliding sideways or having to correct by over- or understeering. Centrifugal force can also be considered as an externally acting force and is computed by the electrical processing circuit 22 according to the travel speed and the hitch angle sensed by the angle sensor.

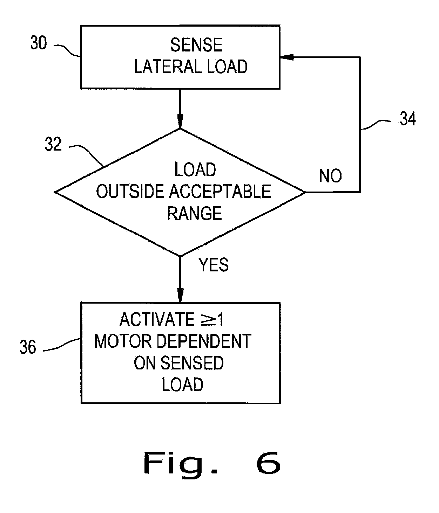

Referring now to Fig. 6, there is shown a simplified illustration of a method of towing a towed vehicle 10 of the present invention. At step 30, a lateral load on load sensing hitch 20 is sensed. If the value of said lateral load based on the output signal of the load sensing hitch 20 falls within a given acceptable range, then tow vehicle 12 simply continues to pull the towed vehicle 10 without assistance from motors 18 according to step 32 and line 34. On the other hand, if the value of said lateral load based on the output signal of the load sensing hitch 20 falls outside of a given acceptable range, then electrical processing circuit 22 actuates at step 36 one or more of the motors 18 to apply a thrust or braking action to a corresponding wheel 16, as desired and appropriate.

The present invention has an advantage in that a large tow vehicle 12 is no longer needed to pull or tow a heavy towed vehicle 10. This allows the size of the tow vehicle 12 to be decreased, which in turn decreases the cost of the required tow vehicle 12 as well as associated operating costs like fuel, etc. A number of towed vehicles 10 can even be coupled together in a train arrangement while still allowing the use of a relatively small tow vehicle 12. outside of a given acceptable range, then electrical processing circuit 22 actuates one or more electric motors 18 to apply a thrust or braking action to a corresponding wheel 16, as desired and appropriate (block 36).

The present invention has an advantage in that a large tow vehicle 12 is no longer needed to pull or tow a heavy towed vehicle 10. This allows the size of the tow vehicle 12 to be decreased, which in turn decreases the cost of the required vehicle as well as associated operating costs like fuel, etc. The towed vehicles 10 can even be coupled together in a train arrangement while still allowing the use of a relatively small tow vehicle 12.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A vehicle arrangement, comprising a tow vehicle (12); a towed vehicle (10) including at least two wheels (16) and at least two motors (18), each of the motors (18) being coupled with a corresponding wheel (16); a load sensing hitch (20) between said tow vehicle (12) and said towed vehicle (10), said load sensing hitch (20) sensing a lateral load and providing an output signal representing a sensed lateral load on said load sensing hitch (20); and an electrical processing circuit (22) coupled with said load sensing hitch (20), said electrical processing circuit (22) actuating at least one of the motors (18), dependent upon said output signal of said load sensing hitch (20), **characterized in that** said electrical processing circuit (22) compares a value of said lateral load based on the output signal of the load sensing hitch (20) with an acceptable load range and actuates at least one of the motors (18) if said value is outside of said acceptable load range.

2. The vehicle arrangement according to claim 1, **characterized in that** said towed vehicle (10) includes said load sensing hitch (20).

3. The vehicle arrangement according to claim 1 or 2, **characterized in that** said lateral load is perpendicular to at least one of a fore and aft axis of said towed vehicle (10) or a fore and aft axis of said tow vehicle (12).

4. The vehicle arrangement according to one of claims 1 to 3, **characterized in that** said electrical processing circuit (22) actuates at least one of the motors (18) to provide one of thrust and braking to a corresponding wheel (16).

5. The vehicle arrangement according to claim 4, **characterized in that** said electrical processing circuit (22) actuates a first motor on one side of said towed vehicle (10) to apply a thrust torque to a corresponding wheel (16) and actuates a second motor on an opposite side of said towed vehicle (10) to apply a braking torque to a corresponding wheel (16).

6. The vehicle arrangement according to claim 4, **characterized in that** an amount of thrust or braking that said at least one of the motors (18) applies to a corresponding wheel (16) is proportional to a magnitude of the lateral load on said load sensing hitch (20).

7. The vehicle arrangement according to one of claims 1 to 6, **characterized in that** the torque which is applied to said at least two motors (18) is limited.

8. The vehicle arrangement according to one of claims 1 to 7, **characterized by** an angle sensor for sensing a relative angular orientation between said tow vehicle (12) and said towed vehicle (10), said angle sensor providing an output signal representing said relative angular orientation.

9. The vehicle arrangement according to one of claims 1 to 8, **characterized in that** said at least two motors (18) are electric motors.

10. A method of towing a towed vehicle using a tow vehicle, the towed vehicle (10) having at least two motors (18) with each of the motors (18) being coupled with a corresponding wheel (16), said method comprising the steps of: sensing a lateral load using a load sensing hitch (20) between said tow vehicle (12) and said towed vehicle (10); outputting an output signal from said load sensing hitch (20) representing said sensed lateral load; and actuating at least one of the motors (18), dependent upon said output signal, **characterized by** comparing a value of said lateral load based on the output signal of the load sensing hitch (20) with an acceptable load range and actuating at least one of the motors (18) if said value is outside of said acceptable load range.

## Patentansprüche

1. Fahrzeuganordnung, die Folgendes aufweist: ein Zugfahrzeug (12); ein gezogenes Fahrzeug (10), das mindestens zwei Räder (16) und mindestens zwei Motoren (18) aufweist, wobei jeder der Motoren (18) mit einem entsprechenden Rad (16) gekoppelt ist; eine belastungsabtastende Anhängerkupplung (20) zwischen dem Zugfahrzeug (12) und dem gezogenen Fahrzeug (10), wobei die belastungsabtastende Anhängerkupplung (20) eine seitliche Belastung abtastet und ein Ausgangssignal bereitstellt, das eine abgetastete seitliche Belastung auf der belastungsabtastenden Anhängerkupplung (20) repräsentiert; und eine elektrische Verarbeitungsschaltung (22), die mit der belastungsabtastenden Anhängerkupplung (20) gekoppelt ist, wobei die elektrische Verarbeitungsschaltung (22) mindestens einen der Motoren (18) abhängig von dem Ausgangssignal der belastungsabtastenden Anhängerkupplung (20) in Betrieb setzt, **dadurch gekennzeichnet, dass** die elektrische Verarbeitungsschaltung (22) einen Wert der seitlichen Belastung beruhend auf dem Ausgangssignal der belastungsabtastenden Anhängerkupplung (20) mit einem annehmbaren Belastungsbereich vergleicht und mindestens einen der Motoren (18) in Betrieb setzt, wenn sich der Wert außerhalb des annehmbaren Belastungsbereichs befindet.

2. Fahrzeuganordnung nach Anspruch 1, **dadurch gekennzeichnet, dass** das gezogene Fahrzeug (10) die belastungsabtastende Anhängerkupplung (20) aufweist.

3. Fahrzeuganordnung nach Anspruch 1 oder 2, **dadurch gekennzeichnet, dass** die seitliche Belastung zu einer Längsachse des gezogenen Fahrzeugs (10) und/oder einer Längsachse des Zugfahrzeugs (12) senkrecht ist.

4. Fahrzeuganordnung nach einem der Ansprüche 1 bis 3, **dadurch gekennzeichnet, dass** die elektrische Verarbeitungsschaltung (22) mindestens einen der Motoren (18) in Betrieb setzt, um einem entsprechenden Rad (16) einen Vortrieb oder eine Bremsung zu erteilen.

5. Fahrzeuganordnung nach Anspruch 4, **dadurch gekennzeichnet, dass** die elektrische Verarbeitungsschaltung (22) einen ersten Motor auf einer Seite des gezogenen Fahrzeugs (10) in Betrieb setzt, um ein Vortriebsdrehmoment auf ein entsprechendes Rad (16) auszuüben, und einen zweiten Motor auf einer gegenüberliegenden Seite des gezogenen Fahrzeugs (10) in Betrieb setzt, um Bremsdrehmoment auf ein entsprechendes Rad (16) auszuüben.

6. Fahrzeuganordnung nach Anspruch 4, **dadurch gekennzeichnet, dass** ein Betrag des Vortriebs oder der Bremsung, den der mindestens eine der Motoren (18) auf ein entsprechendes Rad (16) ausübt, proportional zur Größe der seitlichen Belastung auf die belastungsabtastende Anhängerkupplung (20) ist.

7. Fahrzeuganordnung nach einem der Ansprüche 1 bis 6, **dadurch gekennzeichnet, dass** das Drehmoment, das auf die mindestens zwei Motoren (18) ausgeübt wird, begrenzt ist.

8. Fahrzeuganordnung nach einem der Ansprüche 1 bis 7, **gekennzeichnet durch** einen Winkelsensor zum Abtasten einer relativen Winkelausrichtung zwischen dem Zugfahrzeug (12) und dem gezogenen Fahrzeug (10), wobei der Winkelsensor ein Ausgangssignal liefert, das die relative Winkelausrichtung repräsentiert.

9. Fahrzeuganordnung nach einem der Ansprüche 1 bis 8, **dadurch gekennzeichnet, dass** die mindestens zwei Motoren (18) Elektromotoren sind.

10. Verfahren zum Ziehen eines gezogenen Fahrzeugs mittels eines Zugfahrzeugs, wobei das gezogene Fahrzeug (10) mindestens zwei Motoren (18) aufweist, wobei jeder der Motoren (18) mit einem entsprechenden Rad (16) gekoppelt ist, wobei das Verfahren die folgenden Schritte aufweist: Abtasten einer seitlichen Belastung mittels einer belastungsabtastenden Anhängerkupplung (20) zwischen dem Zugfahrzeug (12) und dem gezogenen Fahrzeug (10); Ausgeben eines Ausgangssignals aus der belastungsabtastenden Anhängerkupplung (20), das die abgetastete seitliche Belastung repräsentiert; und in Betrieb setzen von mindestens einem der Motoren (18) abhängig von dem Ausgangssignal, **gekennzeichnet durch** Vergleichen eines Werts der seitlichen Belastung beruhend auf dem Ausgangssignal der belastungsabtastenden Anhängerkupplung (20) mit einem annehmbaren Belastungsbereich und in Gang setzen von mindestens einem der Motoren (18), wenn sich der Wert außerhalb des annehmbaren Belastungsbereichs befindet.

## Revendications

1. Agencement de véhicules, comportant un véhicule tracteur (12) ; un véhicule tracté (10) comprenant au moins deux roues (16) et au moins deux moteurs (18), chacun des moteurs (18) étant couplé à une roue correspondante (16) ; un attelage (20) à détection de charge entre ledit véhicule tracteur (12) et ledit véhicule tracté (10), ledit attelage (20) à détection de charge détectant une charge latérale et fournissant un signal de sortie représentant une charge latérale détectée sur ledit attelage (20) à détection de charge ; et un circuit électrique (22) de traitement couplé audit attelage (20) à détection de charge, ledit circuit électrique (22) de traitement actionnant au moins un des moteurs (18), en fonction dudit signal de sortie dudit attelage (20) à détection de charge, **caractérisé en ce que** ledit circuit électrique (22) de traitement compare une valeur de ladite charge latérale basée sur le signal de sortie de l'attelage (20) à détection de charge avec une plage de charge admissible et actionne au moins un des moteurs (18) si ladite valeur se situe à l'extérieur de ladite plage de charge admissible.

2. Agencement de véhicules selon la revendication 1, **caractérisé en ce que** ledit véhicule tracté (10) comprend ledit attelage (20) à détection de charge.

3. Agencement de véhicules selon la revendication 1 ou 2, **caractérisé en ce que** ladite charge latérale est perpendiculaire à au moins un axe parmi un axe avant-arrière dudit véhicule tracté (10) et un axe avant-arrière dudit véhicule tracteur (12).

4. Agencement de véhicules selon l'une des revendications 1 à 3, **caractérisé en ce que** ledit circuit électrique (22) de traitement actionne au moins un des moteurs (18) pour transmettre soit une poussée, soit un freinage à une roue correspondante (16).

5. Agencement de véhicules selon la revendication 4, **caractérisé en ce que** ledit circuit électrique (22) de traitement actionne un premier moteur sur un côté dudit véhicule tracté (10) pour appliquer un couple de poussée à une roue correspondante (16) et actionne un deuxième moteur sur un côté opposé dudit véhicule tracté (10) pour appliquer un couple de freinage à une roue correspondante (16).

6. Agencement de véhicules selon la revendication 4, **caractérisé en ce qu'**une quantité de poussée ou de freinage que ledit ou lesdits moteurs (18) appliquent à une roue correspondante (16) est proportionnelle à une amplitude de la charge latérale sur ledit attelage (20) à détection de charge.

7. Agencement de véhicules selon l'une des revendications 1 à 6, **caractérisé en ce que** le couple appliqué auxdits au moins deux moteurs (18) est limité.

8. Agencement de véhicules selon l'une des revendications 1 à 7, **caractérisé par** un capteur d'angle servant à détecter une orientation angulaire relative entre ledit véhicule tracteur (12) et ledit véhicule tracté (10), ledit capteur d'angle fournissant un signal de sortie représentant ladite orientation angulaire relative.

9. Agencement de véhicules selon l'une des revendications 1 à 8, **caractérisé en ce que** lesdits au moins deux moteurs (18) sont des moteurs électriques.

10. Procédé de remorquage d'un véhicule tracté à l'aide d'un véhicule tracteur, le véhicule tracté (10) étant muni d'au moins deux moteurs (18), chacun des moteurs (18) étant couplé à une roue correspondante (16), ledit procédé comportant les étapes consistant à : détecter une charge latérale à l'aide d'un attelage (20) à détection de charge entre ledit véhicule tracteur (12) et ledit véhicule tracté (10) ; délivrer un signal de sortie en provenance dudit attelage (20) à détection de charge représentant ladite charge latérale détectée ; et actionner au moins un des moteurs (18), en fonction dudit signal de sortie, **caractérisé par** les étapes consistant à comparer une valeur de ladite charge latérale basée sur le signal de sortie de l'attelage (20) à détection de charge avec une plage de charge admissible et à actionner au moins un des moteurs (18) si ladite valeur se situe à l'extérieur de ladite plage de charge admissible.
